# EUROPEAN PATENT APPLICATION

(11) **EP 3 352 466 A1**
(43) Date of publication of application: **25.07.2018**
(21) Application number: 16866587.5
(22) Date of filing: 03.11.2016
(51) Int. Cl.: H04N 21/422

(54) **REMOTE CONTROL DEVICE, METHOD FOR DRIVING REMOTE CONTROL DEVICE, IMAGE DISPLAY DEVICE, METHOD FOR DRIVING IMAGE DISPLAY DEVICE, AND COMPUTER-READABLE RECORDING MEDIUM**

(30) Priority: 16.11.2015 KR 20150160669
(71) Applicant: Samsung Electronics Co., Ltd., Suwon-si, Gyeonggi-do 16677 (KR)
(72) Inventor: JO, Kyu-jung, Suwon-si Gyeonggi-do 16709 (KR); KEUM, Kun-ho, Suwon-si Gyeonggi-do 16711 (KR); KIM, Kwan-young, Suwon-si Gyeonggi-do 16509 (KR); KIM, Do-sung, Hwaseong-si Gyeonggi-do 18459 (KR); KIM, Min-sup, Suwon-si Gyeonggi-do 16707 (KR); KIM, Sang-jin, Suwon-si Gyeonggi-do 16543 (KR)
(74) Representative: Appleyard Lees IP LLP
(86) International application number: PCT/KR2016/012561
(87) International publication number: WO 2017/086635

(57) **Abstract**

The present disclosure relates to a remote control device, a method for driving a remote control device, an image display device, a method for driving an image display device, and a computer-readable recording medium. A remote control device according to the present disclosure may comprise: a processor for determining whether the remote control device is commanding a screen of an image display device; and a communication interface unit which, when the determined results show that the screen is being commanded, transmits, under the control of the processor, position information related to the commanded position to the image display device so that a point is displayed at the commanded position of the screen.

## Description

### Technical field

The present disclosure relates generally to a remote control apparatus, a driving method of the remote control apparatus, an image display apparatus, a driving method of the image display apparatus, and a computer readable recording medium, and for example, to a remote control apparatus capable of more intuitively controlling a pointer for selecting items displayed on a screen of the image display apparatus, for example, when a user uses a remote control, a driving method of the remote control apparatus, an image display apparatus, a driving method of the image display apparatus, and a computer readable recording medium.

### Background art

With the development of electronic technologies, various methods for controlling an electronic device have been developed. Conventionally, the electronic device is controlled using buttons installed in the electronic device or a remote control that is a separate device from the electronic device. When the electronic device is controlled using the remote control that is the separate device, there is a problem in that a user needs to check the buttons installed on the remote control one by one and perform a pressing manipulation to perform his / her desired manipulation.

For example, when the pointer displayed on a screen of the electronic device is used to select specific contents on the screen, the user alternately selects a four-way button of the remote control several times to move the point to the corresponding content area and presses a select button installed on the remote control in the corresponding content area to select the specific contents. That is, the user has trouble in selecting the corresponding content by performing an operation of confirming the buttons installed on the remote control several times and pressing the buttons several times.

To supplement the problem, conventionally, there is a method for sensing, by a sensor installed in a remote control, a motion of a user, that is, a motion of a remote control to move a pointer to a user desired item to thereby select the desired item.

By the way, the method has a problem in that the pointer is always displayed at a center of a screen such as DTV based on a relative coordinate pointing scheme and therefore is not intuitive by a user. Therefore, there is a need for a method for allowing a user to more conveniently search for information displayed on a screen of an electronic device even at a long distance.

### Detailed description of invention

### Technical problem

The present disclosure provides a remote control apparatus capable of more intuitively controlling a pointer for selecting items displayed on a screen of the image display apparatus, for example, when a user uses a remote control, a driving method of the remote control apparatus, an image display apparatus, a driving method of the image display apparatus, and a computer readable recording medium.

According to an embodiment, the driving method of the remote control apparatus includes determining whether the remote control apparatus indicates a screen of an image display apparatus, and based on a determination result that a screen is indicated, transmitting location information related to an indicated location of the screen to the image display apparatus so that a pointer is displayed at the indicated location.

The driving method further includes capturing the image display apparatus based on a movement of the remote control apparatus being sensed, and generating the location information by using the captured photograph image.

The determining may include, based on a sensing signal generated in the image display apparatus being detected in the photographed image, determining that the screen is indicated.

The driving method further includes pre-storing a setting value with regard to a location where the sensing signal is generated, and generating the location information based on the pre-stored setting value and a location of the detected sensing signal.

The location where the sensing signal is generated may correspond to an edge portion of the image display apparatus.

The driving method further includes, based on a determination result that a screen is not indicated, notifying that there is no indication by displaying the pointer at a center of the screen.

The driving method further includes, based on the indicated location being changed, providing an amount of change sensed by a sensor as the location information.

The driving method of an image display apparatus includes outputting a sensing signal for sensing in a remote control apparatus, receiving location information provided in the remote control apparatus based on the output sensing signal, determining a location of a pointer for displaying on a screen of an image display apparatus based on the received location information, and displaying the pointer on the determined location.

The outputting the sensing signal may comprise outputting an infrared signal as the sensing signal.

The location information may be related to a location of the output sensing signal detected from a photograph image of the image display apparatus.

The driving method further includes, based on a user moving the remote control apparatus, receiving a sensing value of a movement of the remote control apparatus, as the location information, and changing a location of the displayed pointer based on the sensing value.

According to an embodiment, a remote control apparatus includes a processor configured to determine whether the remote control apparatus indicates a screen of an image display apparatus, and a communication interface configured to, based on a determination result that a screen is indicated, transmit location information related to an indicated location of the screen to the image display apparatus so that a pointer is displayed at the indicated location.

The remote control apparatus further includes, a capturing unit configured to capture the image display apparatus based on a movement of the remote control apparatus being sensed, and the processor may generate the location information by using the captured photograph image.

The processor, based on the sensing signal generated in the image display apparatus being detected in the photographed image, may determine that the screen is indicated.

The remote control apparatus further includes a storage which pre-stores a setting value regarding the location where the sensing signal is generated, and the processor may generate the location information based on the pre-stored setting value and a location of the detected sensing signal.

The location where the sensing signal is generated may correspond to a center of the image display apparatus.

The processor, based on a determination result that a screen is not indicated, may notify that there is no indication by displaying the pointer at a center of the screen.

The processor, based on the indicated location being changed, may provide an amount of change sensed by a sensor as the location information.

An image display apparatus according to an embodiment may include a sensing signal generator configured to output a sensing signal for sensing in a remote control apparatus, a communication interface configured to receive location information provided by the remote control apparatus based on the output sensing signal, a processor configured to determine a location of a pointer for displaying on an image display apparatus based on the received sensing signal, and a display configured to display the pointer on the determined location.

The sensing signal generator may output an infrared signal as the sensing signal.

The location information may be related to a location of the output sensing signal detected in a photographed image of the image display apparatus.

The communication interface, based on a user moving the remote control apparatus, may receive a sensing value of a movement of the remote control apparatus as the location information, and the processor may change a location of the displayed pointer based on the sensing value.

According to an embodiment, a computer recording medium which includes a program for executing a screen display method of an image display apparatus, wherein the screen display method of the image display apparatus includes displaying a selectable item on a screen of the image display apparatus, and based on the remote control apparatus indicating the screen, displaying a pointer on a indicated location of the screen based on the location information generated by the photographed image of the image display apparatus in the remote control apparatus.

### Brief description of the drawings

FIG. 1 is a view illustrating an image processing system according to an embodiment;
FIG. 2 is a view illustrating an exterior of a TV as an example of the image display apparatus illustrated in FIG. 1;
FIG. 3 is a block diagram illustrating an example of a detailed structure of the image display apparatus illustrated in FIG. 1;
FIG. 4 is a block diagram illustrating an example of a detailed structure of the remote control apparatus illustrated in FIG. 1;
FIG. 5 is a block diagram illustrating an example of another detailed structure of the remote control apparatus illustrated in FIG. 1;
FIG. 6 is a block diagram illustrating an example of still another detailed structure of the remote control apparatus illustrated in FIG. 1;
FIG. 7 is a view illustrating an example of a structure of a controller of FIG. 6;
FIG. 8 is a flowchart illustrating a driving process of a remote control apparatus according to an embodiment;
FIG. 9 is a flowchart illustrating a driving process of a remote control apparatus according to another embodiment;
FIG. 10 is a flowchart illustrating a driving process of an image display apparatus according to an embodiment; and
FIG. 11 is a flowchart illustrating a screen display method of an image display apparatus according to an embodiment.

### Description of embodiment

Hereinafter, the present embodiments will be described in detail with reference to drawings.

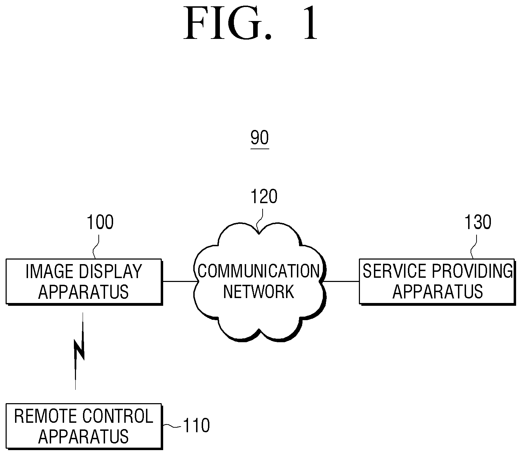

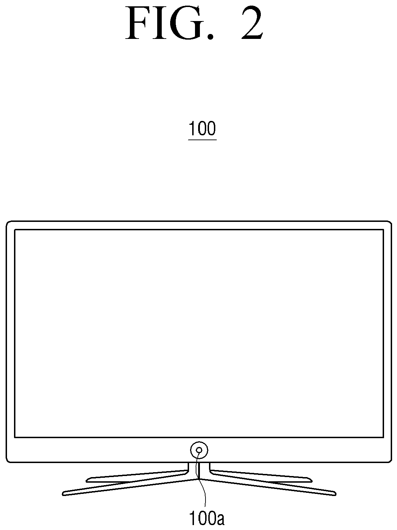

FIG. 1 is a view illustrating an image processing system according to an embodiment, and FIG. 2 is a view illustrating an exterior of a TV as an example of the image display apparatus illustrated in FIG. 1.

As illustrated in FIG. 1, the image processing system 90 includes some or all of an image display apparatus 100, a remote control apparatus 110, a communication network 120, and a service providing apparatus 130.

Herein, "includes some or all" may refer, for example, to a situation in which the communication network 120 is omitted in the system 90 and thus the service providing apparatus 130 (ex. BD player, etc.) may perform direct communication (ex. P2P, HDMI cable) with the image display apparatus 100, and the case in which all of the components described above are included will be described to help sufficient understanding of the present disclosure.

As the image display apparatus 100, an electronic device interworking with the remote control apparatus 110 is preferable. For example, the image display apparatus 100 may include DTV, a desktop computer, a laptop computer, a tablet PC, an audio apparatus, etc. The image display apparatus 100 displays a pointer on a screen only when a user holds a remote control, that is, the remote control apparatus 110, not to disturb image viewing of a viewer, and therefore is compared with a general computer that always displays a pointer of a mouse. Here, the pointer may, for example, refer to a mark (or sign) visually displaying a motion of the remote control apparatus 110 on the screen of the image display apparatus 100.

The image display apparatus 100 according to the embodiment may receive a communication signal provided from the remote control apparatus 110 when a user holds the remote control apparatus 110. In this case, the communication signal may have various forms. For example, the remote control apparatus 110 may provide the communication signal including coordinate information and if there is no coordinate information, may provide the communication signal including information notifying that there is no coordinate information.

The image display apparatus 100 may determine an output scheme of a pointer output on a screen based on an information analysis of the received signal. The image display apparatus 100 according to the present embodiment may not determine the output scheme. In other words, only when the coordinate information is received from the remote control apparatus 110, the pointer may be output to a location designated by a user according to an absolute coordinate scheme based on the information. Therefore, the present embodiment is not particularly limited to determining the output scheme.

When a user directs (or indicates screen direction) the remote control apparatus 110 to the screen of the image display apparatus 100 while holding the remote control apparatus 110, the image display apparatus 100 according to the present disclosure may display a pointer at an indicated location in the directed direction and when the remote control apparatus 110 does not direct to the screen, may display the pointer at the center of the screen. According to the present disclosure, the former may be called the output of the pointer based on the absolute coordinate scheme and the latter may be called the pointer output based on the relative coordinate scheme. That is, the image display apparatus 100 outputs the pointer to the screen by other schemes depending on whether a user directs the remote control apparatus 110 to the screen of the image display apparatus 100.

For example, the image display apparatus 100 generates location information based on a sensing sensor 100a of FIG. 2 to output the pointer to the screen by the absolute coordinate scheme. In other words, if the location information, that is, the coordinate information is transmitted from the remote control apparatus 110, the image display apparatus 100 displays the display location of the pointer based on a set value for a preset location of the sensing sensor 100a and the coordinate information received by the remote control apparatus 110 to display the pointer at the determined location. After the remote control apparatus 110 is held by a user, when there is no received signal, a signal of coordinate value (0, 0) is received as the location information, or notification that there is no coordinate information is received, the image display apparatus 100 outputs the pointer to the center of the screen depending on an initial setting of a system designer.

Thereafter, the image display apparatus 100 changes the location of the pointer based on the location information provided when the user manipulates the remote control apparatus 110. That is, the pointer displayed on the initial screen is determined by the absolute coordinate scheme and displayed, but the subsequent movement of the pointer is made by being calculated by the relative coordinate scheme.

Meanwhile, even though the remote control apparatus 110 does not include a camera (or motion tracking sensor), etc., the image display apparatus 100 determines whether the remote control apparatus 110 may direct to a screen area of the image display apparatus 100 and notify the remote control apparatus 110 of the determined results. For example, when the image display apparatus 100 includes a camera and operate the camera, it may be appreciated whether the user directs the remote control apparatus 110 to the screen while holding the remote control apparatus 110 and so on based on an analysis of the photographed image. In this case, the point to which the user directs the remote control apparatus 110 may be calculated to display the pointer on the screen by the absolute coordinate scheme. Next, it is enough to use sensing values provided from the remote control apparatus 110 as the coordinate values displayed by the relative coordinate scheme. Here, the "screen (region)" means a screen display area of the image display apparatus 110 on which the image is displayed but may further include a margin. In other words, if the pointer is in an error range even though it is slightly out of the screen display area, it is determined that the pointer is located at an edge of the screen display area to display the pointer.

The remote control apparatus 110 includes a sensor determining whether the user holds the remote control apparatus. The sensor may include, for example, a recognition sensor including a pressure sensor recognizing whether the user holds the remote control apparatus 110 based on a pressure, etc., a motion sensor determining whether the motion of the remote control apparatus 110 is generated, and so on. If the signal is received by the sensor, the remote control apparatus 110 may perform the photographing operation using the camera, etc., therein after the predetermined time. That is, the remote control apparatus 110 photographs a front portion (ex. screen) of the image display apparatus 100.

Next, the remote control apparatus 110 analyzes the photographed image to determine at which location the sensing signal output from the image display apparatus 100 is. Further, the analysis may depend on the service providing apparatus 130, which is out of discussion. The image photographed by the remote control apparatus 110 is a still image in a frame unit, and therefore the remote control apparatus 110 may calculate the coordinate information by the absolute coordinate scheme and transmit the calculated coordinate information to the image display apparatus 100. In this case, the image display apparatus 100 may calculate the movement amount (or including a direction) based on the set value for the preset location of the sensing sensor 100a and the coordinate information received by the remote control apparatus 110 and may use the calculated movement amount for the output of the pointer. Further, the remote control apparatus 110 may use the coordinate information calculated by the photographed image and the set value for the preset location of the sensing sensor 100a stored therein to transmit the location information to the image display apparatus 100 in the form of the calculated movement amount, that is, the variation. These are matters that may be determined when a product is released and therefore will not be particularly limited to any one of the schemes.

For example, it is assumed that the remote control apparatus 110 calculates the variation as the location information and a resolution of the DTV is 1920X1080. In the case of the absolute coordinate scheme of setting the upper left of the screen to be (1, 1), the set value of the preset location for the sensing sensor 100a of FIG. 2 may be coordinate information (1080, 960). If the coordinate values of the sensing signal determined in the photographed image are calculated as (540, 960), the distance may be calculated depending on the formula obtaining the distance d between the two coordinates. The remote control apparatus 110 may provide the calculated distance, that is, the variation to the image display apparatus 100 as the location information.

If the process is completed, that is, if the operation of displaying the pointer by the absolute coordinate scheme is completed, the remote control apparatus 110 operates the sensors therein to provide direction information and movement amount information to the image display apparatus 100 so that the image display apparatus 100 may display the pointer by the relative coordinate scheme. For the information generation, the remote control apparatus 110 includes a 6-axis sensor, that is, a gyro sensor, an accelerator sensor, and so on, and may provide the sensing values for operating the sensors by the relative coordinate scheme to the image display apparatus 100.

The communication network 120 includes all of the wired and wireless communication networks. Here, the wire communication network includes an Internet network such as a cable network or a Public Switched Telephone Network (PSTN), and the wireless communication network includes Code Division Multiple Access (CDMA), Wideband Code Division Multiple Access (WCDMA), Global System/Standard for Mobile Communication (GSM), Evolved Packet Core (EPC), Long Term Evolution (LTE), Wireless Broadband Internet (WiBro), or the like. The communication network 120 according to the exemplary embodiment of the present disclosure is not limited thereto and may be used as an access network of a next generation mobile communication system that will be realized later, e.g., for a cloud computing network or the like in a cloud computing environment. For example, when the communication network 120 is a wired communication network, an access point within the communication network 120 may be connected to a switching center, etc., of a telephone station, but when the communication network 120 is a wireless communication network, it may be connected to an SGSN or a gateway GPRS support node (GGSN) to process data or connected to various relay stations such as base station transmission (BTS), NodeB, and e-NodeB to process data.

The communication network 120 may include the access point. The access point includes small base stations such as a femto base station or a pico base station which is mainly installed in a building. Here, the femto or pico base station is classified depending on how many image display apparatuses 100 may be connected, in terms of the classification of the small base station. Of course, the access point includes near field communication modules such as Zigbee and Wi-Fi which perform near field communications with the image display apparatus 100. The access point may use a TCP/IP or a real-time streaming protocol (RTSP) for wireless communications. Here, the short-range communication may be performed according to various types of standards such as Wi-Fi, Bluetooth, Zigbee, Infrared Data Association (IrDA), Radio Frequency (RF) such as Ultra High Frequency (UHF) or Very High Frequency (VHF), Ultra Wideband (UWB), and the like. Therefore, the access point may extract a location of a data packet, designates a best communication path for the extracted location, and transfer a data packet to the next apparatus, for example, the image display apparatus 100 along the designated communication path. The access point may share several lines under the general network environment and may include, for example, a router, a repeater, a relay station, etc.

The service providing apparatus 130 may include a broadcasting server providing a broadcasting service, a search server providing services of professional search portal enterprises, and so on. In other words, the service providing apparatus 130 is preferably operated as an image service source that the user requests according to the present disclosure. Therefore, when the system 90 is configured not to include the communication network 120, the service providing apparatus 130 may be, for example, a blu-ray disk (BD) player or other media apparatuses that are directly operated with the image display apparatus 100.

As the above configuration result, when the user manipulates the remote control apparatus 110, the system may intuitively display the pointer at the user desired location and thus be user-friendly and reduce the number of manipulations, thereby promoting the user convenience.

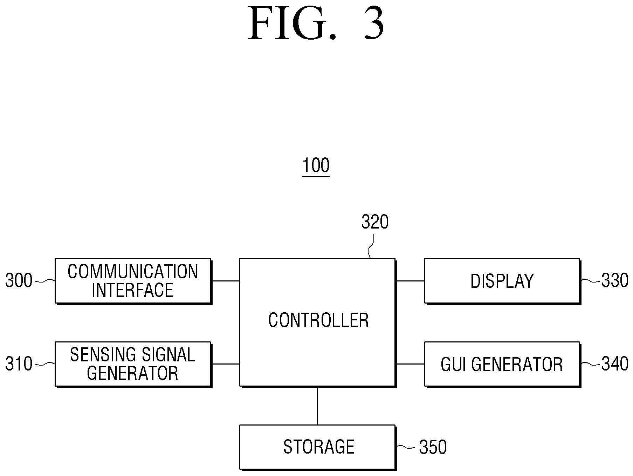

FIG. 3 is a block diagram illustrating an example of a detailed structure of the image display apparatus illustrated in FIG. 1.

Referring to FIGS. 3 and 1, the image display apparatus 100 according to the present disclosure includes a part or the whole of a communication interface 300, a sensing signal generator 310, a controller 320, a display 330, a GUI generator 340, and a storage 350.

Herein, the "including a part or the whole" may refer, for example, to a situation in which some components of the GUI generator 340, the storage 350, etc., are omitted in the image display apparatus 100 or may be integrally configured in other components such as the controller 320, etc., and the case in which all of the components described above are included will be described to help sufficient understanding of the present disclosure.

The communication interface 300 may communicate with the service providing apparatus 130 through the communication network 120. By this, the communication interface 300 may receive the image provided from the service providing apparatus 130 to transmit the received image to the controller 320.

Further, the communication interface 300 may receive the location information provided from the remote control apparatus 110 based on the sensing result of the sensing signal generated from the sensing signal generator 310. In this case, the location information may be provided in various forms as mentioned and even though there is no location information, the communication interface 300 may receive various forms of signals from the remote control apparatus 110. For example, a signal notifying that there is no location information is representative.

The sensing signal generator 310 includes an infrared sensor and is preferably a light emitting element. According to the present disclosure, the sensing signal generator 310 may generate light within an infrared waveband not to allow a user to recognize the light emitted state. Alternatively, the light may be periodically generated. Therefore, a viewer is not disturbed to view an image even though the infrared light is generated.

The sensing signal generator 310 may be located at a lower center of the screen as illustrated in FIG. 2 according to the present disclosure. However, this is only an option, and therefore the sensing signal generator 310 may be located anywhere, for example, at an edge.

The controller 320 may control the general operations of the components in the image display apparatus 100. For example, when the image signal is received through the communication interface 300, the controller 320 may process the received image signal and display the processed signal on the display 330. By the process, various operations of separating the received image signal into a video signal, an audio signal, and additional information, decoding the separated video / audio signal, performing post-processing (ex. scaling of the video signal, amplification of the audio signal, or the like) on the decoded signal are performed, and then the image may be displayed on the display 330 and audio may be output to an audio output (not illustrated).

By the process, the controller 320 performs a control to operate the GUI generator 340 to allow a pointer to be displayed on the screen of the display 330 when there is the location information received through the communication interface 300. For example, the pointer output from the GUI generator 340 is synthesized (or combined) with the video image output to the display 330 and displayed. In this case, the controller 320 determines a location to which the pointer will be output based on the location information received by the communication interface 300 and outputs the pointer to the determined location.

For example, the video image output to the display 330 and the GUI image (including the pointer) output from the GUI generator 340 may form different layers. Therefore, the GUI generator 340 may pre-store the GUI image depending on the coordinate information and then output a specific GUI image including a pointer matched with the location information input from the controller 320 and the controller 320 may synthesize the GUI image with the specific GUI image and output the synthesized image to the display 330. The image processing may be performed by various schemes and therefore will be no longer described.

As described above, the display 330 displays the image processed by the controller 320 on the screen. In this case, the pointer first displayed on the screen is output based on the absolute coordinate scheme according to the present disclosure and the subsequent movement of the pointer is made based on the relative coordinate scheme.

The GUI generator 340 outputs the pre-stored GUI image according to the control of the controller 320. At this point, the GUI image may be one image including the pointer but may be a plurality of unit frame images in which the location of the pointer is located by coordinates. For example, in the case of one image, the location of the pointer may move depending on the coordinate information to be output and when the pointer is stored by coordinates, the GUI generator 340 may output the unit frame image matched with the location information provided from the controller 320.

The storage 350 may store various data or information processed by the controller 320 and then output the data or information when there is the request of the controller 320. Further, the storage 350 may pre-store the location for the sensing signal generator 310 of the image display apparatus 100 as the set value. For example, when the controller 320 determines the location of the pointer output from the GUI generator 340, the storage 350 may provide the stored set value according to the control of the controller 320.

Reviewing in more detail the controller 320, the controller 320 may be differently operated depending on in what form the remote control apparatus 110 is defined to transmit the location information. In other words, since the controller 320 already knows the information on the location of the infrared sensor as the sensing signal generator 310, when the location information is received in the form of the movement amount (or vector having the size and direction information), the controller 320 determines the location of the pointer only by considering when the pointer is displayed. On the other hand, when the remote control apparatus 110 provides the location information in the form of the coordinate values, the controller 320 may use the set value pre-stored in the storage 350 to calculate the movement amount and may control the display 330 to determine the location of the pointer based on the calculated movement amount to output the image. The scheme is determined at the time of the product design, and therefore the present disclosure is not particularly limited to the specific scheme.

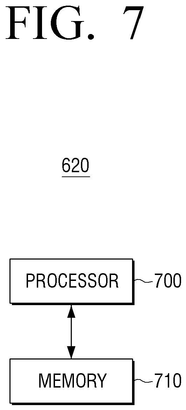

Meanwhile, the controller 320 may include a processor for performing a substantial control function and a memory that stores a program (or algorithm) calculating the movement amount and executes the stored program according to the control of the processor. Therefore, the operation of the controller 320 may be the operation of the processor. The detailed content will be again described with reference to FIG. 7.

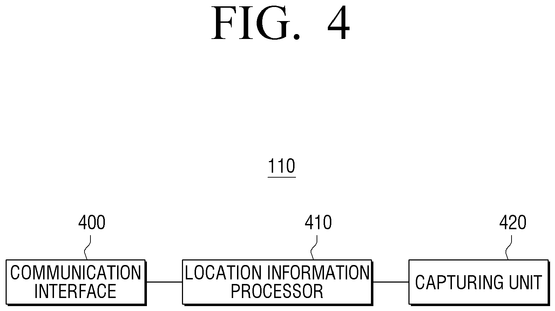

FIG. 4 is a block diagram illustrating an example of a detailed structure of the remote control apparatus of FIG. 1.

Referring to FIGS. 4 and 1, the remote control apparatus 110 according to the present disclosure includes a part or the whole of a communication interface 400, a location information processor 410, and a capturing unit 420. Here, the "including a part or the whole" is the same as the foregoing meaning.

The communication interface 400 may communicate with the image display apparatus 100. For this purpose, the communication interface 400 may include a communication module that performs near field communications such as WiFi and Bluetooth, or the like.

The communication interface 400 transmits the location information provided from the location information processor 410 to the image display apparatus 100. By the process, if there is no change in location information, the communication interface 400 may transmit a signal notifying that there is no change in location information to the image display apparatus 100.

The location information processor 410 may generate the location information by the absolute coordinate scheme according to the present disclosure. In other words, the location information processor 410 analyzes the photographed image provided from the capturing unit 420 and detects the location of the sensing signal generated for the image display apparatus 100. Further, the location information processor 410 extracts the coordinate information on the detected location of the sensing signal. For example, the coordinate information may be acquired by masking, that is, covering the photographed image with a masking signal (or film) in which the coordinate information is defined. Next, the location information processor 410 may transmit the extracted coordinate information as the location information to the image display apparatus 100 through the communication interface 400.

Further, the location information processor 410 may pre-store, for example, the information on the location of the infrared sensor and calculate the movement amount using the extracted coordinate information and the pre-stored set value, that is, the movement amount based on the preset location to provide the calculated movement amount to the image display apparatus 100 as the location information.

When it is determined that a user holds the remote control apparatus 110, the capturing unit 420 may be operated according to the control of the location information processor 410. Actually, it may be determined whether the user holds the remote control apparatus 110 by the pressure sensor, the motion sensor, or the like.

However, in addition thereto, the determination on whether the user holds the remote control apparatus 110 may be made by various schemes. For example, one of the schemes is a case in which the image display apparatus 100 transmits the information that the user holds the remote control apparatus 110. In other words, since the image display apparatus 100 is highly likely to have a camera if considering several aspects such as a function while satisfying the consumer demand for products, if it is determined that the user holds the remote control apparatus 110 as the analysis result of the image photographed by the camera, the image display apparatus 100 may notify the remote control apparatus 110 of the determination. When the notification signal is received, the capturing unit 420 may be operated according to the control of the location information processor 410.

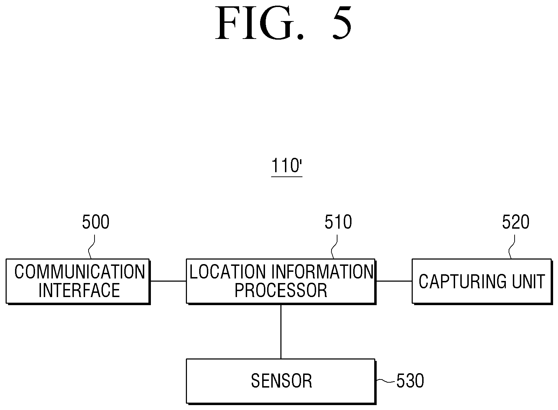

FIG. 5 is a block diagram illustrating another example structure of the remote control apparatus illustrated in FIG. 1.

Referring to FIGS. 5 and 1, a remote control apparatus 110' according to another example embodiment of the present disclosure includes a part or the whole of a communication interface 500, a location information processor 510, a capturing unit 520, and a sensor 530. Here, the "including a part or the whole" is the same as the foregoing meaning.

There is no great difference when comparing the remote control apparatus 110' illustrated in FIG. 5 with the remote control apparatus 110 illustrated in FIG. 4. However, the primary difference between the remote control apparatus 110' and the remote control apparatus 110 is that the FIG. 5 embodiment may directly sense its own motion.

In other words, when there is no motion by a user, the remote control apparatus 110' of FIG. 5 is operated in a sleep mode to interrupt power from a power supply unit (not illustrated) like a battery to the communication interface 500 and the capturing unit 520. Therefore, the power of the power supply unit may be supplied only to the location information processor 510 and the sensor 530. When the user holds the remote control apparatus 110', the location information processor 510 may operate the capturing unit 520 in an active mode. Further, after the predetermined time lapses, the location information processor 510 may control the capturing unit 520 to perform the photographing operation.

The following operations are not so different from those of the location information processor 410 of FIG. 4, but the location information processor 510 of FIG. 5 may additionally provide the location information for controlling the pointer by the relative coordinate scheme to the image display apparatus 100. For this purpose, the location information processor 510 may control the sensor 530 to acquire the sensing values and provide the acquired sensing values to the image display apparatus 100 as the location information.

The sensor 530 may include various kinds of sensors. For example, the sensor 530 may include the pressure sensor recognizing when the user holds the remote control apparatus 110' and include the 6-axis sensor, that is, the gyro sensor and the accelerator sensor for controlling the pointer by the relative coordinate scheme. The sensor may generate the sensing values such as the moving direction and the moving distance of the remote control apparatus 110' and provide the generated sensing values to the location information processor 510.

Except for the aspect, the communication interface 500 and the location information processor 510 of FIG. 5 are not so different from the communication interface 400 and the location information processor 410 of FIG. 4 and therefore the content thereof will be replaced by the foregoing content.

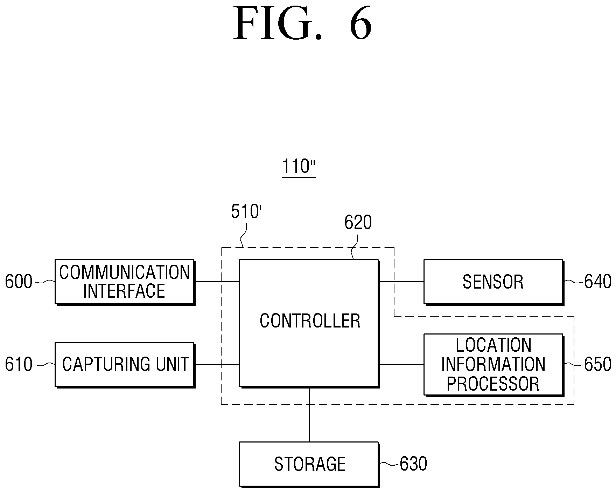

FIG. 6 is a block diagram illustrating still another example structure of the remote control apparatus illustrated in FIG. 1, and FIG. 7 is a view illustrating an example of a structure of a controller of FIG. 6.

Referring to FIG. 6, a remote control apparatus 110" according to still another example embodiment of the present disclosure includes a part or the whole of a communication interface 600, a capturing unit 610, a controller 620, a storage 630, a sensor 640, and a location information processor 650. Here, the "including a part or the whole" is the same as the foregoing meaning.

The remote control apparatus 110" illustrated in FIG. 6 is similar to the remote control apparatus 110' illustrated in FIG. 5. However, the remote control apparatus 110" of FIG. 6 has a difference from the remote control apparatus 110' of FIG. 5 in that the location information processor 510 of FIG. 5 is physically separated into the controller 620 performing a control function and the location information processor 650 generating the location information.

In other words, the location information processor 510 of FIG. 5 may execute a control function and an operation of generating location information using one SW, that is, a program, but the location information processor 510 of FIG. 5 is different from that of FIG. 6 in which the controller 620 may perform the control function and the location information processor 650 may perform the operation of generating location information.

Briefly describing again, the location information processor 650 calculates the coordinate information of the sensing signal detected from the photographed image provided from the capturing unit 610 to output the pointer to the screen of the image display apparatus 100 by the absolute coordinate scheme and uses the determined coordinate information as the location information.

Except for the aspect, the communication interface 600, the capturing unit 610, the controller 620, the storage 630, the sensor 640, and the location information processor 650 are similar to the communication interface 500, the location information processor 510, the capturing unit 520, and the sensor 530 of FIG. 5, and therefore the content thereof will be replaced by the foregoing content.

Meanwhile, the controller 620 of FIG. 6 may include a processor 700 and a memory 710 as illustrated in FIG. 7. The processor 700 performs the control function as described above. Further, the processor 700 may load the program stored in the location information processor 650 of FIG. 6 to the memory 710 when the remote control apparatus 110" is initially driven. Next, to perform the operation of generating location information, it is enough for the processor 700 to execute the program stored in the memory 710. As the result, the remote control apparatus 110" may increase a data processing rate over FIG. 6.

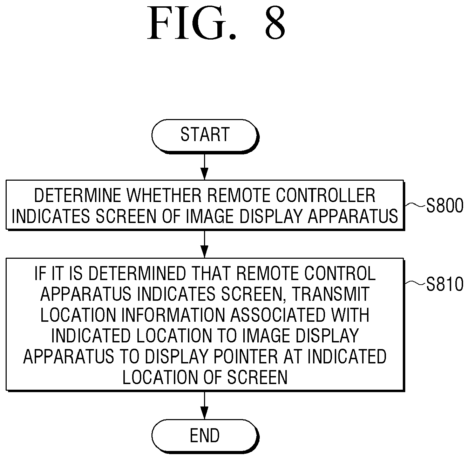

FIG. 8 is a flowchart illustrating a driving process of a remote control apparatus according to an embodiment.

For convenience of explanation, referring to FIGS. 8 and 1, the remote control apparatus 110 according to the embodiment determines whether the remote control apparatus 110 indicates, that is, directs to the screen of the image display apparatus 100 in S800. It may be determined whether the remote control apparatus 110 directs to the screen by, for example, analyzing the image obtained by photographing the image display apparatus 100 by the remote control apparatus 110. For example, if the sensing signal, that is, the infrared signal provided from the image display apparatus 100 within the photographed image is sensed, it may be determined that the remote control apparatus 110 directs to the screen.

As the determination result, if it is determined that the remote control apparatus 110 indicates the screen, the remote control apparatus 110 transmits the location information associated with the indicated location to the image display apparatus 100 to display the pointer at the indicated location of the screen in S810.

Next, the remote control apparatus 110 transmits the location information for moving the pointer displayed on the image display apparatus 100 by the relative coordinate scheme to the image display apparatus 100. For this purpose, the remote control apparatus 110 may transmit the sensing values sensed by the sensor therein as the location information.

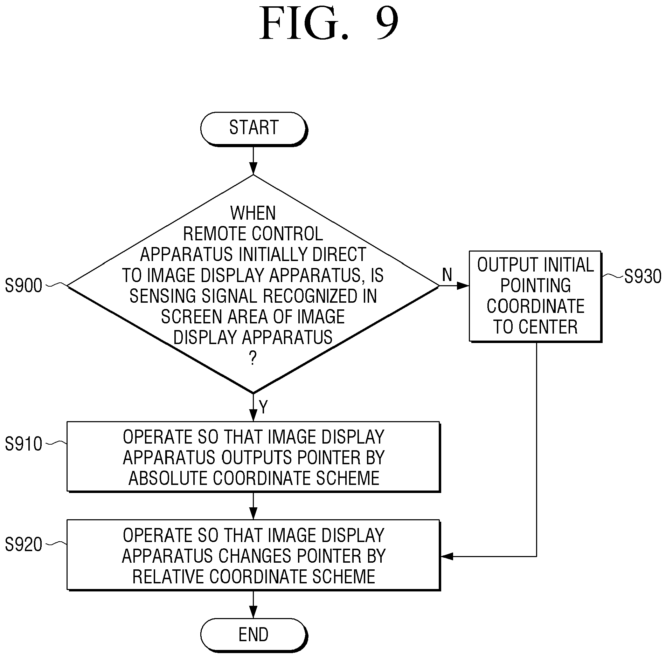

FIG. 9 is a flowchart illustrating a driving process of a remote control apparatus according to another embodiment.

For convenience of explanation, referring to FIGS. 9 and 1, the remote control apparatus 110 according to another example embodiment of the present disclosure determines whether the sensing signal (ex. infrared signal) is recognized in the screen area of the image display apparatus 100 when the remote control apparatus 110 initially directs to the image display apparatus 100 in S900. That is, the remote control apparatus 110 determines whether the sensing signal is present within the image obtained by photographing the image display apparatus 100.

Next, if the sensing signal is recognized in the screen area, the remote control apparatus 110 calculates the coordinate information of the sensing signal from the photographed image (by the absolute coordinate scheme) and uses the calculated coordinate information to control the output of the pointer of the image display apparatus 100 in S910. For this purpose, the remote control apparatus 110 may provide the calculated coordinate information or the information in the changed form thereof to the image display apparatus 100 as the location information.

When the initial output of the pointer is performed on the screen of the image display apparatus 100, the remote control apparatus 110 is operated so that the subsequent movement of the pointer is made by the relative coordinate scheme in S920. For this purpose, the remote control apparatus 110 may transmit the sensing values generated by the gyro sensor and the accelerator sensor to the image display apparatus 100 as the location information.

Meanwhile, in step S900, if it is determined that the sensing signal is not recognized in the screen area of the image display apparatus 100, the remote control apparatus 110 is operated to output the pointer to the center of the screen of the image display apparatus 100 in S930.

For this purpose, the remote control apparatus 110 may transmit the coordinate information corresponding to the center of the screen to the image display apparatus 100, but may merely transmit only a signal which is not recognized in the screen area of the image display apparatus 100 from the remote control apparatus 110 to the image display apparatus 100 depending on previous agreements of the image display apparatus 100 and the remote control apparatus 110 to perform higher-speed information processing.

Even after the remote control apparatus is operated to display the pointer at the center of the screen, like step S920, the remote control apparatus 110 may transmit the sensing values sensed by the sensor to the image display apparatus 100 so that the subsequent movement of the pointer is made by the relative coordinate scheme.

Meanwhile, as described above, the remote control apparatus 110 does not include the capturing unit such as the camera and only the image display apparatus 100 may include the capturing unit such as the camera.

In this case, it may be notified from the image display apparatus 100 to the remote control apparatus 110 whether the remote control apparatus 110 directs to the screen area of the image display apparatus 100 by analyzing the photographed image. Here, the "screen area" may be understood as including the margin, that is, the error range.

According to the above notification, the remote control apparatus 110 may operate the gyro sensor and the accelerator sensor therein to transmit the sensing values to the image display apparatus 100. The sensing values may be used so that the image display apparatus 100 displays the pointer by the relative coordinate scheme.

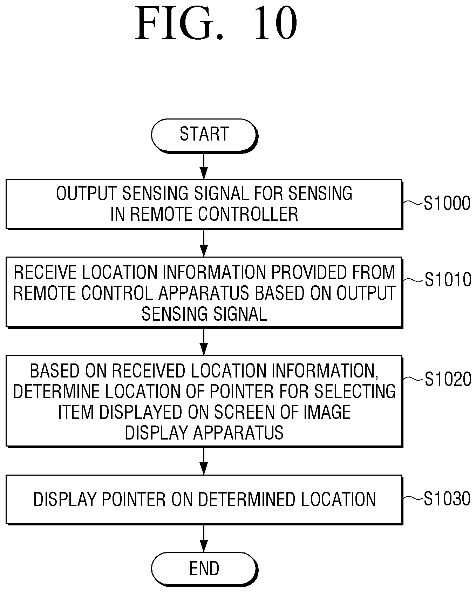

FIG. 10 is a flowchart illustrating a driving process of an image display apparatus according to an embodiment.

For convenience of explanation, referring to FIGS. 10 and 1, the image display apparatus 100 according to the present disclosure outputs the sensing signal sensed by the remote control apparatus 110 in S1000. Here, the sensing signal may be preferably an infrared signal.

Next, the image display apparatus 100 receives the location information provided from the remote control apparatus 110 based on the output sensing signal in S1010. In this case, the received location information may be the coordinate information or the distance value representing the movement amount.

Further, the image display apparatus 100 determines the location of the pointer displayed on the screen of the image display apparatus 100 based on the received location information in S1020. Here, the pointer corresponds to a visual mark or a signal for selecting items displayed on the screen. The image display apparatus 100 already knows the set value for the preset location of, for example, the infrared sensor outputting the sensing signal, and therefore may calculate the location of the pointer based on the set value thereof and the received location information. As described above, when there are two coordinates, the image display apparatus 100 finds the distance value from the coordinates and applies the distance value and the direction based on the preset location to determine the location of the pointer. For this purpose, the image display apparatus 100 may execute a separate program to determine the location of the pointer.

Further, the image display apparatus 100 displays the pointer at the determined location in S1030.

The process is performed by using the output sensing signal to allow the remote control apparatus 110 to provide the sensing signal in the photographed image and the coordinate information generated by the absolute coordinate as the location information, which may be described as the output of the pointer by the absolute coordinate scheme.

When the initial output process of the pointer is performed, the image display apparatus 100 outputs the pointer by the relative coordinate scheme depending on the sensing values sensed by the sensor of the remote control apparatus 110. For example, if the initial output location of the pointer is determined based on the absolute coordinate scheme, the location of the pointer is changed by continuously reflecting the direction information and the distance information based on the determined initial output location.

Meanwhile, although not illustrated in the drawings, the image display apparatus 100 may interwork with the remote control apparatus 110 that does not include the capturing unit such as the camera.

In this case, the image display apparatus 100 may drive the camera to determine whether the remote control apparatus 110 directs to the screen area based on the analysis of the photographed image. At this point, the determination result may be notified to the remote control apparatus 110. Therefore, the image display apparatus 100 may receive the sensing values sensed by the gyro sensor, or the like from the remote control apparatus 110.

Further, the image display apparatus 100 may detect the direction in which the remote control apparatus 110 directs to the screen when analyzing the photographed image and estimates the directed direction and the directed point by calculating, for example, an angle, and initially output the pointer by the absolute coordinate scheme based on the estimated direction and point. Next, the pointer may move by the relative coordinate scheme using the received sensing values.

As such, to output the pointer to the screen by the absolute coordinate scheme and the relative coordinate scheme, the detailed operation of the image display apparatus 100 may be slightly different depending on how to interwork the image display apparatus 100 with the remote control apparatus 110 using hardware resources, or the like. Therefore, the present disclosure is not particularly limited to the above contents.

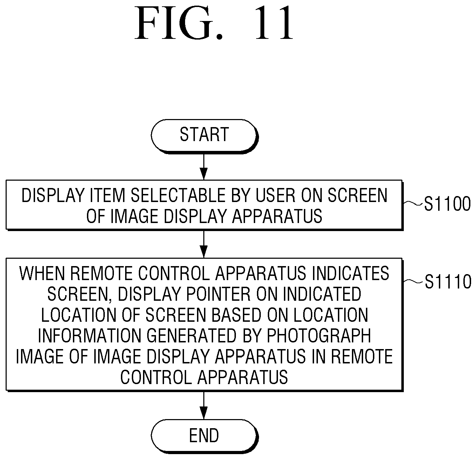

FIG. 11 is a flowchart illustrating a screen display method of an image display apparatus according to an embodiment.

For convenience of explanation, referring to FIGS. 11 and 1, the image display apparatus 100 according to the present disclosure displays the items selectable by the user on the screen of the image display apparatus 100 in S1100. In this case, the items may be items for selecting a specific program in EPG and may include various things such as a specific product for Internet shopping.

Next, when the remote control apparatus 110 indicates the screen, the image display apparatus 100 displays the pointer at the indicated location of the screen based on the location information generated by the image obtained by photographing the image display apparatus 100 by the remote control apparatus 110 in S1110.

That is, when the user directs to the remote control apparatus 110, the image display apparatus 100 immediately displays the pointer at the directed direction and location, not at the center portion of the screen.

By this, the image display apparatus 100 more intuitively displays the pointer on the screen and thus the user may feel that the image display apparatus 100 is more user-friendly.

For example, assume that the user selects a menu command calling the EPG through the remote control apparatus 110. Next, the remote control apparatus 110 displays the pointer by the absolute coordinate scheme as described above to initially output the pointer to the screen. For this purpose, the remote control apparatus 110 may use the photographed image.

It has been described that all the components constituting the exemplary embodiment are combined in one or are combined to operate, but this is not limited thereto. For example, at least one or more of all the components may be selectively combined to operate within the object scope. Each of the components may be implemented with one piece of independent hardware, but a part or all of the components may be selectively combined to be implemented with computer program having a program module which performs a part or all of functions combined in one or a plurality of pieces of hardware. Codes and code segments constituting the computer program may be easily construed by those skilled in the art. The exemplary embodiment may be implemented by storing the computer program or method in a non-transitory computer-readable medium and reading and executing the computer program through a computer.

Here, the non-transitory computer readable medium is not a medium that stores data for a short moment such as a register, a cash and a memory and the like, but a medium that stores data semi-permanently and which is readable by an apparatus. In detail, the programs described above may be stored and provided in the non-transitory computer readable medium such as a CD, a digital versatile disk (DVD), a hard disk, a Blu-ray disk, a USB, a memory card, a ROM, or the like.

While the present disclosure has been shown and described with reference to certain preferred embodiments thereof, it will be understood by those skilled in the art that various changes in form and details may be made therein without departing from the spirit and scope of the invention as defined by the appended claims.

## Claims

1. A driving method of a remote control apparatus comprising:
determining whether the remote control apparatus indicates a screen of an image display apparatus; and
based on a determination result that a screen is indicated, transmitting location information related to an indicated location of the screen to the image display apparatus so that a pointer is displayed at the indicated location.

2. The driving method as claimed in claim 1, further comprising:
capturing the image display apparatus based on a movement of the remote control apparatus being sensed; and
generating the location information by using the captured photograph image.

3. The driving method as claimed in claim 2, wherein the determining comprises, based on a sensing signal generated in the image display apparatus being detected in the photographed image, determining that the screen is indicated.

4. The driving method as claimed in claim 3, further comprising:
pre-storing a setting value with regard to a location where the sensing signal is generated; and
generating the location information based on the pre-stored setting value and a location of the detected sensing signal.

5. The driving method as claimed in claim 4, wherein the location where the sensing signal is generated corresponds to an edge portion of the image display apparatus.

6. The driving method as claimed in claim 1, further comprising:
based on a determination result that a screen is not indicated, notifying that there is no indication by displaying the pointer at a center of the screen.

7. The driving method as claimed in claim 1, further comprising:
based on the indicated location being changed, providing an amount of change sensed by a sensor as the location information.

8. The driving method of an image display apparatus comprising:
outputting a sensing signal for sensing in a remote control apparatus;
receiving location information provided in the remote control apparatus based on the output sensing signal;
determining a location of a pointer for displaying on a screen of an image display apparatus based on the received location information; and
displaying the pointer on the determined location.

9. The driving method as claimed in claim 8, wherein the outputting the sensing signal comprises outputting an infrared signal as the sensing signal.

10. The driving method as claimed in claim 9, wherein the location information is related to a location of the output sensing signal detected from a photograph image of the image display apparatus.

11. The driving method as claimed in claim 8, further includes:
based on a user moving the remote control apparatus, receiving a sensing value of a movement of the remote control apparatus, as the location information; and
changing a location of the displayed pointer based on the sensing value.

12. A remote control apparatus comprising:
a processor configured to determine whether the remote control apparatus indicates a screen of an image display apparatus; and
a communication interface configured to, based on a determination result that a screen is indicated, transmit location information related to an indicated location of the screen to the image display apparatus so that a pointer is displayed at the indicated location.

13. The remote control apparatus as claimed in claim 12, further comprises:
a capturing unit configured to capture the image display apparatus based on a movement of the remote control apparatus being sensed, and
wherein the processor generates the location information by using the captured photograph image.

14. An image display apparatus comprising:
a sensing signal generator configured to output a sensing signal for sensing in a remote control apparatus;
a communication interface configured to receive location information provided by the remote control apparatus based on the output sensing signal;
a processor configured to determine a location of a pointer for displaying on an image display apparatus based on the received sensing signal; and
a display configured to display the pointer on the determined location.

15. The image display apparatus as claimed in claim 14, wherein the communication interface, based on a user moving the remote control apparatus, receives a sensing value of a movement of the remote control apparatus as the location information; and
wherein the processor changes a location of the displayed pointer based on the sensing value.
